# EUROPÄISCHE PATENTSCHRIFT

(11) **EP 3 863 887 B1**
(45) Veröffentlichungstag und Bekanntmachung des Hinweises auf die Patenterteilung: **25.10.2023**
(21) Anmeldenummer: 19761824.2
(22) Anmeldetag: 28.08.2019
(51) Int. Cl.: B60N 2/427, B60N 2/42, B60N 2/06

(54) **FAHRZEUGSITZKONSOLE**
VEHICLE SEAT CONSOLE
CONSOLE DE SIÈGE DE VÉHICULE

(30) Priorität: 09.10.2018 DE 102018124929
(43) Veröffentlichungstag der Anmeldung: 18.08.2021
(73) Patentinhaber: Bayerische Motoren Werke Aktiengesellschaft, 80809 München (DE)
(72) Erfinder: UNGER, Martin, 10249 Berlin (DE); PAINER, Robert, 80939 München (DE); KLEINDL, Sylvia, 81476 München (DE); HUF, Andreas, 86356 Neusäss (DE); MARTIN, Robert, 80807 München (DE); KOEHLER, Fabian, 83626 Valley (DE)
(86) Internationale Anmeldenummer: PCT/EP2019/072996
(87) Internationale Veröffentlichungsnummer: WO 2020/074172

(56) Entgegenhaltungen:
- WO-A1-2019/038455
- US-A- 3 552 795
- US-A- 3 730 586
- US-A- 3 806 190
- US-A1- 2004 232 685

## Beschreibung

### TECHNISCHES GEBIET

Die Erfindung betrifft eine Fahrzeugsitzkonsole nach dem Oberbegriff des Patentanspruchs 1. Die Erfindung betrifft weiterhin einen Fahrzeugsitz mit einer solchen Fahrzeugsitzkonsole sowie ein Kraftfahrzeug mit zumindest einem derartigen Fahrzeugsitz.

### HINTERGRUND DER ERFINDUNG

Gurtsysteme und Airbags sind seit Jahrzehnten anerkannte Insassenschutzsysteme von Kraftfahrzeugen. Sie reduzieren die Belastungen auf die Insassen eines Fahrzeugs im Fall einer Fahrzeugkollision zumeist nur in definierten, aufrechten Sitzpositionen. Liegepositionen werden jedoch besonders bei vollautomatisiertem Fahren immer wichtiger, so dass auch ein adäquater Insassenschutz in solchen Liegepositionen gewährleistet sein muss. Mit den bekannten Insassenschutzsystemen jedoch können im Fall einer Fahrzeugkollision die Belastungen auf den Insassen bei liegender oder halbliegender Position nicht ausreichend reduziert werden. Es bedarf daher einer Weiterentwicklung der Insassenschutzsysteme, durch die im Fall einer Fahrzeugkollision die Beschleunigung des Körpers eines Fahrzeuginsassen auch bei liegender bzw. halbliegender Position auf ein festgelegtes Maß begrenzt wird. Dazu kann eine die kinetische Energie dämpfende Relativverschiebbarkeit zwischen dem Fahrzeugsitz und dem Fahrzeugchassis vorgesehen sein. Ist die Fahrzeugsitzkonsole zum Zweck der Sitzlängsverstellung mit einer Längsverstelleinrichtung versehen, die selbsthemmend ist, beispielsweise mit einem Spindelantrieb, so muss dabei zunächst die Selbsthemmung aufgehoben werden um die Relativverschiebbarkeit zu ermöglichen, es muss also eine Entkopplung in der Längsverstelleinrichtung erfolgen. Das erfordert eine aufwendige Konstruktion mit zusätzlichem Sensorikaufwand.

Aus der US 3 552 795 A und der US 3 730 586 A sind Fahrzeugsitzkonsolen bekannt, die zwischen dem Fahrzeugsitz und der Fahrzeugstruktur angeordnete Einrichtungen zur Absorption von Energie aufweisen, die im Fall hoher Verzögerungen des Kraftfahrzeugs wirksam werden, um die auf einen Fahrzeuginsassen wirkende Verzögerung zu reduzieren.

### DARSTELLUNG DER ERFINDUNG

Aufgabe der vorliegenden Erfindung ist es, ausgehend von der US 3 552 795 A, eine gattungsgemäße Fahrzeugsitzkonsole anzugeben, die ausgebildet ist, um im Fall einer Fahrzeugkollision die Belastungen auf den Körper einer auf dem Fahrzeugsitz befindlichen Person ausreichend zu begrenzen, auch wenn diese Person sich in einer liegenden oder halbliegenden Position befindet, ohne dass eine aufwendige Sensorik zur Außerbetriebsetzung der Selbsthemmung der Längsverstelleinrichtung erforderlich ist.

Diese Aufgabe wird gelöst mit den Merkmalen des Patentanspruchs 1.

Eine Fahrzeugsitzkonsole mit zumindest einem fahrzeugseitigen Führungselement und zumindest einem parallel zum fahrzeugseitigen Führungselement angeordneten sitzseitigen Führungselement sowie zumindest einer von einer Antriebseinrichtung beaufschlagten Längsverstelleinrichtung, die ausgestaltet ist, um eine Relativverstellung zwischen dem fahrzeugseitigen Führungselement und dem sitzseitigen Führungselement zu bewirken, wobei zwischen der Längsverstelleinrichtung und dem fahrzeugseitigen Führungselement und/oder zwischen der Längsverstelleinrichtung und dem sitzseitigen Führungselement eine Kraftbegrenzungsvorrichtung mit einem Kraftbegrenzungselement vorgesehen ist, das einen ersten Verformungsabschnitt aufweist, der sich unter einer auf ihn einwirkenden Kraft oberhalb eines vorgegebene Kraft-Schwellenwertes verformt, zeichnet sich dadurch aus, dass das Kraftbegrenzungselement einen zweiten Verformungsabschnitt aufweist, der durch eine Umlenkanordnung geführt ist

### VORTEILE

Die Längsverstellung des Fahrzeugsitzes erfolgt auf an sich bekannte Weise mit einer selbsthemmenden Längsverstelleinrichtung, wodurch der Fahrzeugsitz in Fahrzeuglängsrichtung verstellt wird. Diese Vorrichtung lagert den Fahrzeugsitz somit beweglich relativ zur Fahrzeugstruktur. Im Fall einer Kollision ist der mit dem Insassen beladene Fahrzeugsitz aufgrund seiner Massenträgheit bestrebt, sich entgegen der auf die Fahrzeugstruktur einwirkenden Kollisionskraft weiter fortzubewegen. Da die Kraftbegrenzungsvorrichtung zwischen der Längsverstelleinrichtung und dem fahrzeugseitigen Führungselement und/oder zwischen der Längsverstelleinrichtung und dem sitzseitigen Führungselement vorgesehen ist, bildet die Kraftbegrenzungsvorrichtung den erforderlichen Freiheitsgrad, der für die erforderliche Relativbewegung zwischen dem fahrzeugseitigen Führungselement und dem sitzseitigen Führungselement benötigt wird, da die Kraftbegrenzungsvorrichtung unterhalb eines vorgegebenen Kraft-Schwellenwertes in Längsrichtung, also in Richtung der erforderlichen Relativbewegung, steif und unbeweglich ist und da sie oberhalb des vorgegebene Kraft-Schwellenwertes eine Relativbewegung zulässt, bei der kinetische Energie abgebaut wird. Dieser Abbau von kinetischer Energie und deren Umwandlung in Verformungsenergie erfolgt einerseits im ersten Verformungsabschnitt und andererseits im zweiten Verformungsabschnitt.

Ausgelöst wird die kinetische Energie verzehrende Kraftbegrenzungsvorrichtung durch die Kräfte, die durch Insassen, Gurtsystem und Sitz im Kollisionsfall wirken. Daher kann das Erfordernis, eine Entkopplung in der Längsverstelleinrichtung vornehmen zu müssen, möglicherweise entfallen. Die erfindungsgemäße Fahrzeugsitzkonsole liefert bessere Insassenschutzwerte im Kollisionsfall als ohne Kraftbegrenzung, insbesondere bei Liegepositionen.

Weitere bevorzugte und vorteilhafte Ausgestaltungsmerkmale der erfindungsgemäßen Fahrzeugsitzkonsole sind Gegenstand der Unteransprüche 2 bis 8.

Vorzugsweise weist die Längsverstelleinrichtung eine Spindelwelle sowie eine mit dieser in Gewindeeingriff stehende Spindelmutter auf. Durch die einem derartigen Spindelantrieb innewohnende Selbsthemmung, ist die selbsthemmende Eigenschaft in der Längsverstelleinrichtung vorgesehen.

Vorteilhaft ist auch, wenn das Kraftbegrenzungselement einerseits mit der Längsverstelleinrichtung und andererseits mit dem sitzseitigen Führungselement gekoppelt ist.

Vorteilhaft ist auch, wenn das Kraftbegrenzungselement einerseits mit der Längsverstelleinrichtung und andererseits mit dem fahrzeugseitigen Führungselement gekoppelt ist.

In einer vorteilhaften Ausführungsform der Erfindung ist die Umlenkanordnung aus zumindest drei Umlenkelementen gebildet, die abwechselnd auf zwei Seiten einer idealen Translationsebene des zweiten Verformungsabschnitts angeordnet sind und die jeweils einen Umlenkabschnitt aufweisen, der in die Translationsebene hinein oder durch diesen hindurch ragt. Durch diese Anordnung von Umlenkelementen wird der zwischen den Umlenkelementen hindurchgeführte zweite Verformungsabschnitt wellig verformt und im statischen Normalzustand zwischen den Umlenkelementen eingespannt. Wirkt dann im Falle einer Fahrzeugkollision impulsartig eine hohe Zugkraft auf den zweiten Verformungsabschnitt, so ist dieser bestrebt, sich relativ zu den Umlenkelementen zu bewegen, und er wird zwischen den Umlenkelementen hindurch gezogen. Dabei wird die durch die Einspannung vorhandene Wellenstruktur des zweiten Verformungsabschnitts unter Energieverbrauch derart umgeformt, dass die Wellenberge zunächst geglättet und dann in entgegengesetzter Richtung wieder ausgeformt werden.

Besonders wirksam und gleichmäßig erfolgt diese Umformung, wenn die Umlenkelement von Umlenkrollen gebildet sind.

Vorteilhafterweise ist vorgesehen, dass die Verformungsabschnitte aus einem plastisch verformbaren Material oder alternativ einem elastisch verformbaren Material bestehen oder dieses aufweisen, wobei vorzugsweise zumindest der zweite Verformungsabschnitt aus einem Metallblech besteht, oder ein solches aufweist. Durch die Wahl der Materialbeschaffenheit und auch die Wahl der Dicke und/oder Breite des zweiten Verformungsabschnitts kann ein Schwellenwert für die Verformungskraft vorgegeben werden

Besonders vorteilhaft ist eine Ausführungsform, bei der zumindest der zweite Verformungsabschnitt über seine Längserstreckung unterschiedliche Verformungseigenschaften aufweist. Dadurch lässt sich die Höhe der abbaubaren Energie über den Zeitverlauf und somit die auf einen auf dem Fahrzeugsitz sitzenden Passagier einwirkende Maximalbeschleunigung steuern.

In einer bevorzugten Ausführungsform, die mit anderen Ausführungsformen kombinierbar ist, ist zwischen Längsverstelleinrichtung und dem zugeordneten sitzseitigen beziehungsweise dem zugeordneten fahrzeugseitigen Führungselement parallel zum Kraftbegrenzungselement eine starre und im Kollisionsfall unterbrechbare Verbindungseinrichtung vorgesehen ist. Diese Ausgestaltung gewährleistet, dass im normalen Betriebszustand stets eine starre und steife Anbindung des Fahrzeugsitzes an die Fahrzeugstruktur gewährleistet ist, die erst im Kollisionsfall aufgelöst wird, so dass erst dann die Kraftbegrenzungsvorrichtung wirksam werden kann.

Besonders vorteilhaft ist auch eine Ausführungsform, bei der im Bereich der Befestigung der Kraftbegrenzungsvorrichtung am fahrzeugseitigen Führungselement beziehungsweise am sitzseitigen Führungselement oder im Bereich der Befestigung der Kraftbegrenzungsvorrichtung an der Längsverstelleinrichtung ein Abschnitt mit einer geschwächten Materialfestigkeit, beispielsweise einer lokal dünneren Wandstärke zum Beispiel der Kraftbegrenzungsvorrichtung vorgesehen ist. In diesem so genannten "Soll-Reiß-Abschnitt" kann das Material, zum Beispiel das Metallblech, einreißen, wenn die auf diesen Befestigungsbereich bei einer Kollision einwirkende Kraft beziehungsweise der Impuls zu groß wird. Dabei wird kinetische Energie abgebaut und durch Einreißen des Materials in "freie Oberfläche" umgewandelt, ähnlich wie das beim Aufreißen der Blechlasche zum Öffnen einer Getränkedose der Fall ist.

Die Erfindung betrifft auch einen Fahrzeugsitz mit einer erfindungsgemäßen Fahrzeugsitzkonsole.

Zudem ist die Erfindung gerichtet auf ein Kraftfahrzeug mit zumindest einem erfindungsgemäßen Fahrzeugsitz.

Bevorzugte Ausführungsbeispiele der Erfindung mit zusätzlichen Ausgestaltungsdetails und weiteren Vorteilen sind nachfolgend unter Bezugnahme auf die beigefügte Zeichnung näher beschrieben und erläutert.

### KURZE BESCHREIBUNG DER ZEICHNUNGEN

Es zeigt:
- Fig. 1: eine schematische Seitenansicht einer erfindungsgemäßen Fahrzeugsitzkonsole und
- Fig. 2: eine vergrößerte und detailliertere Darstellung der Kraftbegrenzungsvorrichtung mit einem ersten und zweiten Verformungsabschnitt.

### DARSTELLUNG VON BEVORZUGTEN AUSFÜHRUNGSBEISPIELEN

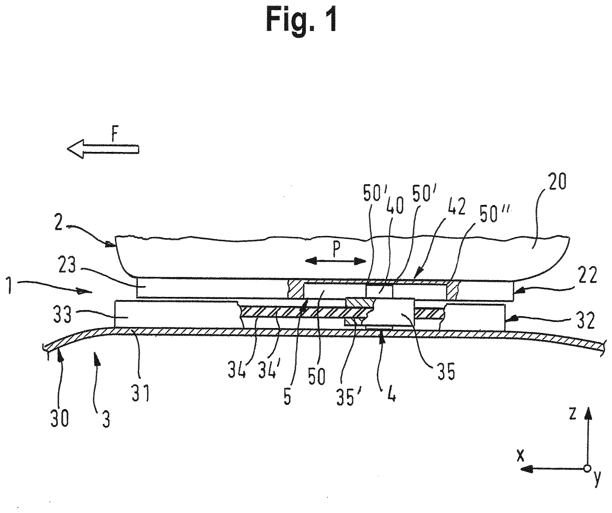

Fig. 1 zeigt in einer teilweise geschnittenen Seitenansicht schematisch eine Fahrzeugsitzkonsole 1 gemäß der vorliegenden Erfindung. Die Fahrzeugsitzkonsole 1 verbindet einen Fahrzeugsitz 2 mit dem Chassis 30 eines Fahrzeugs 3. Dazu weist die Fahrzeugsitzkonsole 1 in Fahrzeuglängsrichtung x ausgerichtete linke und rechte obere und untere Führungselemente auf, von denen in Fig. 1 nur die linken Führungselemente gezeigt sind, die rechten Führungselemente sind entsprechend aufgebaut und werden daher zur Vermeidung von Wiederholungen nicht weiter beschrieben.

Das untere, fahrzeugseitige Führungselement 32 weist eine mit dem Fahrzeugboden 31 fest verbundene untere Führungsschiene 33 auf, die im Wesentlichen parallel zur Fahrzeuglängsrichtung x verläuft. Mit dieser unteren Führungsschiene 33 steht eine am Fahrzeugsitz 2 angebrachte obere Führungsschiene 23 in herkömmlicher Weise in Gleiteingriff. Die obere Führungsschiene 23 bildet ein oberes, sitzseitiges Führungselement 22.

Zwischen der unteren Führungsschienen 33 und der oberen Führungsschiene 23 ist eine jeweils in den Figuren nicht näher gezeigte und beschriebene obere und untere Gleitfläche ausgebildet, die vorteilhafterweise mit einem Gleitmittel versehen oder beschichtet sind. An Stelle der Gleitflächen kann auch ein Wälzlager, zum Beispiel ein Kugellager, vorgesehen sein.

Innerhalb oder neben der unteren Führungsschiene 33 ist eine Spindelwelle 34 fahrzeugfest angebracht, die sich im Wesentlichen über die Länge der unteren Führungsschiene 33 erstreckt und die mit einem Außengewinde 34' versehen ist. Auf der Spindelwelle 34 ist eine Spindelmutter 35 angebracht, die ein Innengewinde 35' aufweist, das mit dem Außengewinde 34' im Eingriff steht, so dass sich die Spindelmutter 35 durch Rotation um ihre Längsachse entlang der Spindelwelle 34 bewegen kann.

Die Spindelmutter 35 ist im gezeigten Beispiel mit einer Kraftbegrenzungsvorrichtung 5 verbunden und ist dort in oder an einem ersten Bereich 50' eines sich im Wesentlichen parallel zur Längsrichtung der Führungselemente 22, 32, also im eingebauten Zustand des Fahrzeugsitzes 2 parallel zur Fahrzeuglängsrichtung x, erstreckenden Kraftbegrenzungselements 50 drehbar gelagert. Die Kraftbegrenzungsvorrichtung 5 ist ihrerseits mit dem sitzseitigen Führungselement 22 verbunden, wozu im gezeigten Beispiel ein zweiter Bereich 50" des Kraftbegrenzungselements 50 am Fahrzeugsitz 2 oder an der oberen Führungsschiene 23, vorzugsweise entgegen der Fahrtrichtung über oder hinter dem ersten Bereich 50', angebracht ist. Das Kraftbegrenzungselement 50 weist einen ersten Verformungsabschnitt 52 und einen zweiten Verformungsabschnitt 54 auf, die weiter unten noch beschrieben werden.

Am Fahrzeugsitz 2 ist beispielsweise an der Unterseite des Sitzbodens 20 oder an der Kraftbegrenzungsvorrichtung 5 ein Sitzverstellmechanismus 4 angeordnet. Dieser Sitzverstellmechanismus 4 weist eine Antriebseinrichtung 40, beispielsweise einen Elektromotor, auf, die über eine (nicht gezeigte) Antriebswelle mit der Spindelmutter 35 zur Drehmomentübertragung gekoppelt ist und diese mit einer Antriebskraft beaufschlagt. Eine von der Antriebseinrichtung 40 erzeugte Drehung der Antriebswelle bewirkt eine Drehung der Spindelmutter 35, die dann in Fahrtrichtung F nach vorne oder in entgegengesetzter Richtung nach hinten wandert und den Fahrzeugsitz 2 in diese Richtung mitnimmt, wie es durch den Doppelpfeil P in Fig. 1 symbolisiert ist, um eine gewollte Sitzverstellung zu bewirken.

Die untere Führungsschiene 33, die oberen Führungsschiene 23, die Spindelwelle 34 und die Spindelmutter 35 bilden auf diese Weise eine Längsverstelleinrichtung 42 für den Fahrzeugsitz 2. Die Längsverstelleinrichtung 42 bildet aufgrund des Spindelantriebs eine selbsthemmende translatorische Bewegungseinheit, die bewirkt, dass sich der Fahrzeugsitz 2 im Normalfall durch Aufbringen von äußeren Kräften nicht ungewollt verschieben kann.

Im Falle einer stärkeren Kollision des Fahrzeugs 3 mit einem Hindernis oder einem anderen Fahrzeug, bei welcher die Kollisionskraft eine wesentliche Komponente in Fahrzeuglängsrichtung x aufweist, wird das Fahrzeug 3 durch die impulsartig auftretende Kollisionskraft positiv (Heckaufprall) oder negativ (Frontalaufprall) beschleunigt. Bei dieser Beschleunigung ist der Fahrzeugsitz 2 mit der darauf sitzenden Person aufgrund der Trägheitsmasse dieser Person und des Fahrzeugsitzes 2 bestrebt, zunächst die ursprüngliche Geschwindigkeit und Bewegungsrichtung beizubehalten, während das Fahrzeug 3 der von der kollisionsbedingt ausgeübten Beschleunigung ausgelösten Geschwindigkeitsänderung unterliegt. Dies führt dazu, dass die mit dem Fahrzeugchassis 30 fest verbundenen fahrzeugseitigen Führungselemente und die mit dem Fahrzeugsitz 2 verbundenen oder gekoppelten sitzseitigen Führungselemente aufgrund der kollisionsbedingten Kräfte bestrebt sind, eine Relativbewegung auszuführen. Diese Kräfte wirken auf die Verformungsabschnitte 52, 54 des Kraftbegrenzungselements 50 der Kraftbegrenzungsvorrichtung 5 und verformen diese, wodurch eine gebremste Relativbewegung des Fahrzeugsitzes 2 zum Fahrzeugchassis 30 ermöglicht wird. Die durch den Kollisionsimpuls hervorgerufene Kollisionsbeschleunigung wird folglich durch das Verformen der Verformungsabschnitte 52, 54 gemildert, so dass die auf den Fahrzeugsitz 2 und die darauf sitzende Person einwirkende Beschleunigung geringer ist als die Kollisionsbeschleunigung. Ein Teil der kinetischen Energie des Fahrzeugsitzes 2 mit der darauf sitzenden Person wird somit in Verformungsenergie umgewandelt.

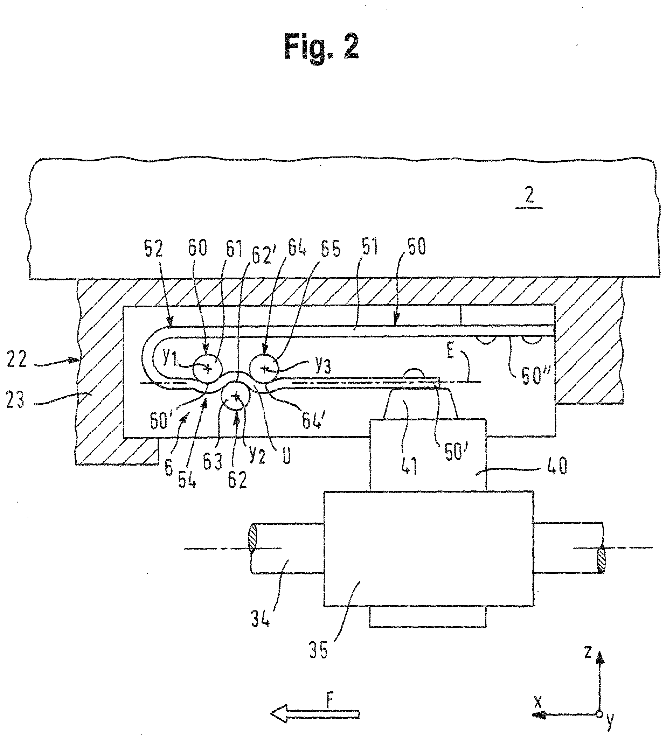

Der Aufbau und die Funktionsweise der erfindungsgemäßen Kraftbegrenzungsvorrichtung wird nachstehend anhand der Fig. 2 an einem ersten Ausführungsbeispiel näher erläutert, wobei die Figuren jeweils nur eine schematische Darstellung des Aufbaus der jeweiligen Kraftbegrenzungsvorrichtung 5 wiedergeben. Auch die Anbindung der Kraftbegrenzungsvorrichtung 5 an das sitzseitige Führungselement 22 beziehungsweise an den Sitz 2 sowie die Anbindung der Spindelmutter 35 an die Kraftbegrenzungsvorrichtung 5 sind lediglich schematisch dargestellt. Die Fahrtrichtung F des Fahrzeugs und damit die Einbaulage der Kraftbegrenzungsvorrichtung 5 in die erfindungsgemäße Fahrzeugsitzkonsole 1 ist ebenfalls in den Figuren jeweils angegeben.

Die Darstellung in den Figuren betrifft einen in Fahrtrichtung F weisenden Fahrzeugsitz 2 und der Aufbau sowie die Funktionsbeschreibung der Kraftbegrenzungsvorrichtung 5 sind auf den Fall einer Frontalkollision bezogen. Es ist für den Fachmann trivial, die Erfindung auch an einen entgegen der Fahrtrichtung weisenden Fahrzeugsitz anzupassen und dabei die Kraftbegrenzungsvorrichtung um 180° zu spiegeln. Dasselbe trifft auch auf die Auslegung der Kraftbegrenzungsvorrichtung für einen Heckaufprall zu. Außerdem ist es für den Fachmann trivial, zwei zueinander gespiegelte Kraftbegrenzungsvorrichtungen in der Fahrzeugsitzkonsole vorzusehen, um sowohl für den Fall einer Frontalkollision als auch für den Fall eines Heckaufpralls den gewünschten Schutz der Passagiere zu erzielen. Diese Varianten sind daher ebenfalls von der Erfindung mit umfasst.

Das Kraftbegrenzungselement 50 ist im gezeigten Beispiel der Fig. 2 als plastisch verformbares Metallblech 51 ausgebildet, dessen Flächenausdehnung sich im Wesentlichen in der xy-Ebene des in das Fahrzeug 3 eingebauten Fahrzeugsitzes 2 erstreckt. In der Darstellung der Fig. 2 ist das Kraftbegrenzungselement 50 also nur in dessen Dickenerstreckung gezeigt.

Das Kraftbegrenzungselement 50 ist an einem ersten Ende mit seinem ersten Bereich 50' an einem Trägerteil 41 angebracht, das die Antriebseinrichtung 40 trägt und das die Spindelmutter 35 drehbar lagert. Mit seinem anderen Ende ist das Kraftbegrenzungselement 50 mit seinem zweiten Bereich 50" mit der oberen Führungsschiene 23 des sitzseitigen Führungselements 22 fest verbunden.

Zwischen dem ersten Bereich 50' und dem zweiten Bereich 50" des Kraftbegrenzungselements 50 erstrecken sich ein erster Verformungsabschnitt 52 und ein zweiter Verformungsabschnitt 54 des Kraftbegrenzungselements 50. Diese Verformungsabschnitte 52, 54 sind so ausgebildet, dass sie sich unter einer auf sie einwirkenden Kraft oberhalb eines vorgegebenen Kraft-Schwellenwertes verformen. Beide Verformungsabschnitte 52, 54 sind in Fahrtrichtung vor dem ersten Abschnitt 50' gelegen.

Im ersten Verformungsabschnitt 52 ist das Kraftbegrenzungselement 50 um 180° gebogen und bildet im Längsschnitt der Fig. 2 eine nach hinten (entgegen der Fahrtrichtung) offene Krümmung in Form eines liegenden U aus.

Eine solche U-förmige Verformung führt im Fall einer Frontalkollision zu einer Verschiebung des ersten Bereichs 50' relativ zu dem zweiten Bereich 50" des Kraftbegrenzungselements 50 und damit zu einer Verlagerung der Spindelmutter 35 relativ zum Fahrzeugsitz 2 in Fahrzeuglängsrichtung x.

Ist also im Falle einer Frontalkollision, bei der das Fahrzeugchassis 30 aufgrund der Kollisionskräfte impulsartig verzögert wird, der Fahrzeugsitz 2 bestrebt, sich in Fahrtrichtung F weiterzubewegen, so wird der Verformungsabschnitt 52 derart verformt, dass die 180°-Krümmung des Kraftbegrenzungselements 50 entlang des Verformungsabschnitts 52 wandert. Der zur Anbringung an der oberen Führungsschiene 23 weisende Abschnitt der 180°-Krümmung des Kraftbegrenzungselements 50 wird dabei gekrümmt und dessen zum Trägerteil 41 weisender Abschnitt wird gestreckt, wodurch jeweils kinetische Energie in Verformungsenergie umgewandelt wird.

Zwischen dem ersten Verformungsabschnitt 52 und dem am Trägerteil 41 angebrachten ersten Bereich 50' des Kraftbegrenzungselements 50 ist der zweite Verformungsabschnitt 54 gelegen. Dieser im Urzustand ebene Abschnitt des Kraftbegrenzungselements 50 ist durch eine Umlenkanordnung 6, also eine Anordnung von Umlenkelementen, geführt, die als Umlenkelemente 60, 62, 64 drei (oder mehr) Umlenkrollen 61, 63, 65 aufweist, zwischen denen der zweite Verformungsabschnitt 54 des Kraftbegrenzungselements 50 eingespannt ist. Diese Umlenkrollen 61, 63, 65 sind abwechselnd oberhalb und unterhalb des zweiten Verformungsabschnitts 54 des Kraftbegrenzungselements 50 angeordnet und bezüglich der oberen Führungsschiene 23 um jeweils eine parallel zur Fahrzeugquerachse y verlaufende Drehachse y₁, y₂, y₃ drehbar gelagert.

Der gedachte, ideale ebene Weg, um den zweiten Verformungsabschnitt 54 des Kraftbegrenzungselements 50 zwischen den Umlenkrollen 61, 63, 65 hindurchzuführten, bildet eine gedachte Translationsebene E. Die Umlenkrollen sind dabei allerdings so angeordnet, dass ihr jeweils zu dieser gedachten Translationsebene E weisender Umlenkabschnitt 60', 62', 64' durch diese Translationsebene E hindurch ragt. Daraus ergibt sich ein wellenartiger Umlenkpfad U entlang dem der zweite Verformungsabschnitt 54 geführt wird.

Bewegt sich nun im Fall einer Frontalkollision der Fahrzeugsitz 2 relativ zum Fahrzeugchassis 30 weiter, so bewegen sich die Achsen der Umlenkrollen 61, 63, 65 in Fahrtrichtung F weiter und die Umlenkrollen 61, 63, 65 wälzen auf dem zweiten Verformungsabschnitt 54 ab, wobei sie diesen wellenartig verformen. Die dabei aufgewendete Verformungsarbeit setzt ebenfalls einen Teil der kinetischen Kollisionsenergie in eine Verformung des Kraftbegrenzungselements 50 um.

In einer nicht in den Figuren dargestellten Ausführungsform ist das Trägerteil 41 im Normalzustand mittels einer im Kollisionsfall automatisch durchtrennbaren Verbindungseinrichtung (nicht gezeigt) mit der oberen Führungsschiene fest verbunden.

Es ist von der Erfindung ebenfalls umfasst, die Kraftbegrenzungsvorrichtung 5 (alternativ oder zusätzlich) zwischen der Spindelwelle 34 und der unteren Führungsschiene 33 vorzusehen.

Die Erfindung ist nicht auf die obigen Ausführungsbeispiele beschränkt, die lediglich der allgemeinen Erläuterung des Kerngedankens der Erfindung dienen. Im Rahmen des Schutzumfangs, der durch die Ansprüche definiert ist, kann die erfindungsgemäße Vorrichtung vielmehr auch andere als die oben beschriebenen Ausgestaltungsformen annehmen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Fahrzeugsitzkonsole
- 2: Fahrzeugsitz
- 3: Fahrzeug
- 4: Sitzverstellmechanismus
- 5: Kraftbegrenzungsvorrichtung
- 6: Umlenkanordnung
- 20: Sitzboden
- 22: oberes, sitzseitiges Führungselement
- 23: obere Führungsschiene
- 30: Chassis
- 31: Fahrzeugboden
- 32: unteres, fahrzeugseitiges Führungselement
- 33: untere Führungsschiene
- 34: Spindelwelle
- 34': Außengewinde
- 35: Spindelmutter
- 35': Innengewinde
- 40: Antriebseinrichtung
- 41: Trägerteil
- 42: Längsverstelleinrichtung
- 50: Kraftbegrenzungselement
- 50': erster Bereich
- 50": zweiter Bereich
- 50‴: dritter Bereich
- 51: Metallblech
- 52: erster Verformungsabschnitt
- 54: zweiter Verformungsabschnitt
- 60: Umlenkelement
- 60': Umlenkabschnitt
- 61: Umlenkrolle
- 62: Umlenkelement
- 62': Umlenkabschnitt
- 63: Umlenkrolle
- 64: Umlenkelement
- 64': Umlenkabschnitt
- 65: Umlenkrolle

- x: Fahrzeuglängsrichtung
- y: Fahrzeugquerrichtung
- E: Translationsebene
- F: Fahrtrichtung
- P: Doppelpfeil
- U: Umlenkpfad

## Patentansprüche

1. Fahrzeugsitzkonsole mit zumindest einem fahrzeugseitigen Führungselement (32) und zumindest einem parallel zum fahrzeugseitigen Führungselement (32) angeordneten sitzseitigen Führungselement (22) sowie zumindest einer von einer Antriebseinrichtung (40) beaufschlagten Längsverstelleinrichtung (42), die ausgestaltet ist, um eine Relativverstellung zwischen dem fahrzeugseitigen Führungselement (32) und dem sitzseitigen Führungselement (22) zu bewirken, wobei zwischen der Längsverstelleinrichtung (42) und dem fahrzeugseitigen Führungselement (32) und/oder zwischen der Längsverstelleinrichtung (42) und dem sitzseitigen Führungselement (22) eine Kraftbegrenzungsvorrichtung (5) mit einem Kraftbegrenzungselement (50) vorgesehen ist, das einen ersten Verformungsabschnitt (52) aufweist, der sich unter einer auf ihn einwirkenden Kraft oberhalb eines vorgegebene Kraft-Schwellenwertes verformt,
**dadurch gekennzeichnet,**
**dass** das Kraftbegrenzungselement (50) einen zweiten Verformungsabschnitt (54) aufweist, der durch eine Umlenkanordnung (6) geführt ist.

2. Fahrzeugsitzkonsole nach Anspruch 1,
**dadurch gekennzeichnet,**
**dass** die Längsverstelleinrichtung (42) eine Spindelwelle (34) sowie eine mit dieser in kämmendem Eingriff stehende Spindelmutter (35) aufweist.

3. Fahrzeugsitzkonsole nach Anspruch 1 oder 2,
**dadurch gekennzeichnet,**
**dass** das Kraftbegrenzungselement (50) einerseits mit der Längsverstelleinrichtung (42) und andererseits mit dem sitzseitigen Führungselement (22) gekoppelt ist.

4. Fahrzeugsitzkonsole nach Anspruch 1 oder 2,
**dadurch gekennzeichnet,**
**dass** das Kraftbegrenzungselement (50) einerseits mit der Längsverstelleinrichtung (42) und andererseits mit dem fahrzeugseitigen Führungselement (32) gekoppelt ist.

5. Fahrzeugsitzkonsole nach einem der vorhergehenden Ansprüche,
**dadurch gekennzeichnet,**
**dass** die Umlenkanordnung (6) aus zumindest drei Umlenkelementen (60, 62, 64), vorzugsweise Umlenkrollen (61, 63, 65), gebildet ist, die abwechselnd auf zwei Seiten einer Translationsebene (E) des zweiten Verformungsabschnitts (54) angeordnet sind und die jeweils einen Umlenkabschnitt (60', 62', 64') aufweisen, der in die Translationsebene (E) hinein oder durch diesen hindurch ragt.

6. Fahrzeugsitzkonsole nach einem der vorhergehenden Ansprüche,
**dadurch gekennzeichnet,**
**dass** die Verformungsabschnitte (52, 54) aus einem plastisch verformbaren Material oder alternativ einem elastisch verformbaren Material bestehen oder dieses aufweisen, wobei vorzugsweise zumindest der zweite Verformungsabschnitt (54) aus einem Metallblech besteht, oder ein solches aufweist.

7. Fahrzeugsitzkonsole nach Anspruch 6,
**dadurch gekennzeichnet,**
**dass** zumindest der zweite Verformungsabschnitt (54) über seine Längserstreckung unterschiedliche Verformungseigenschaften aufweist.

8. Fahrzeugsitzkonsole nach einem der vorhergehenden Ansprüche,
**dadurch gekennzeichnet,**
**dass** zwischen Längsverstelleinrichtung (42) und dem zugeordneten sitzseitigen beziehungsweise dem zugeordneten fahrzeugseitigen Führungselement (22, 32) parallel zum Kraftbegrenzungselement (50) eine starre und im Kollisionsfall unterbrechbare Verbindungseinrichtung vorgesehen ist.

9. Fahrzeugsitz mit einer Fahrzeugsitzkonsole (1) nach einem der vorhergehenden Ansprüche.

10. Kraftfahrzeug mit zumindest einem Fahrzeugsitz (2) nach Anspruch 9.

## Claims

1. Vehicle seat console having at least one vehicle-mounted guide element (32) and at least one seat-mounted guide element (22), which is arranged parallel to the vehicle-mounted guide element (32), and at least one longitudinal adjustment device (42), which is activated by a drive device (40) and is configured to effect a relative adjustment between the vehicle-mounted guide element (32) and the seat-mounted guide element (22), wherein a force-limiting apparatus (5) with a force-limiting element (50) is provided between the longitudinal adjustment device (42) and the vehicle-mounted guide element (32) and/or between the longitudinal adjustment device (42) and the seat-mounted guide element (22), the force-limiting element having a first deformation section (52) which deforms under a force acting thereon above a predetermined force threshold value,
**characterized**
**in that** the force-limiting element (50) has a second deformation section (54) which is guided by a deflecting arrangement (6).

2. Vehicle seat console according to Claim 1,
**characterized**
**in that** the longitudinal adjustment device (42) has a spindle shaft (34) and a spindle nut (35) which is in meshing engagement with the spindle shaft.

3. Vehicle seat console according to Claim 1 or 2,
**characterized**
**in that** the force-limiting element (50) is coupled on one side to the longitudinal adjustment device (42) and on the other side to the seat-mounted guide element (22).

4. Vehicle seat console according to Claim 1 or 2,
**characterized**
**in that** the force-limiting element (50) is coupled on one side to the longitudinal adjustment device (42) and on the other side to the vehicle-mounted guide element (32).

5. Vehicle seat console according to one of the preceding claims,
**characterized**
**in that** the deflecting arrangement (6) is formed from at least three deflecting elements (60, 62, 64), preferably deflecting rollers (61, 63, 65), which are arranged in an alternating manner on two sides of a translation plane (E) of the second deformation section (54) and which each have a deflecting section (60', 62', 64') which projects into the translation plane (E) or through the latter.

6. Vehicle seat console according to one of the preceding claims,
**characterized**
**in that** the deformation sections (52, 54) are composed of, or comprise, a plastically deformable material or alternatively an elastically deformable material, wherein preferably at least the second deformation section (54) consists of a metal sheet, or comprises the latter.

7. Vehicle seat console according to Claim 6,
**characterized**
**in that** at least the second deformation section (54) has different deformation properties over its longitudinal extent.

8. Vehicle seat console according to one of the preceding claims,
**characterized**
**in that** a rigid connecting device which can be interrupted in the event of a collision is provided between the longitudinal adjustment device (42) and the associated seat-mounted or the associated vehicle-mounted guide element (22, 32) parallel to the force-limiting element (50).

9. Vehicle seat having a vehicle seat console (1) according to one of the preceding claims.

10. Motor vehicle having at least one vehicle seat (2) according to Claim 9.

## Revendications

1. Console de siège de véhicule comportant au moins un élément de guidage (32) côté véhicule et au moins un élément de guidage (22) côté siège agencé parallèlement à l'élément de guidage (32) côté véhicule ainsi qu'au moins un dispositif de réglage longitudinal (42) sollicité par un dispositif d'entraînement (40), lequel dispositif de réglage longitudinal est conçu pour provoquer un réglage relatif entre l'élément de guidage (32) côté véhicule et l'élément de guidage (22) côté siège, un dispositif de limitation de force (5) doté d'un élément de limitation de force (50) étant prévu entre le dispositif de réglage longitudinal (42) et l'élément de guidage (32) côté véhicule et/ou entre le dispositif de réglage longitudinal (42) et l'élément de guidage (22) côté siège, lequel élément de limitation de force présente une première partie de déformation (52) qui se déforme sous l'effet d'une force agissant sur celui-ci et supérieure à une valeur seuil de force prédéfinie,
**caractérisée en ce que**
l'élément de limitation de force (50) présente une deuxième partie de déformation (54) qui est guidée par le biais d'un agencement de déviation (6).

2. Console de siège de véhicule selon la revendication 1,
**caractérisée en ce que**
le dispositif de réglage longitudinal (42) présente un arbre de broche (34) ainsi qu'un écrou de broche (35) en prise par engrènement avec celui-ci.

3. Console de siège de véhicule selon la revendication 1 ou 2,
**caractérisée en ce que**
l'élément de limitation de force (50) est accouplé d'un côté au dispositif de réglage longitudinal (42) et de l'autre côté à l'élément de guidage (22) côté siège.

4. Console de siège de véhicule selon la revendication 1 ou 2,
**caractérisée en ce que**
l'élément de limitation de force (50) est accouplé d'un côté au dispositif de réglage longitudinal (42) et de l'autre côté à l'élément de guidage (32) côté véhicule.

5. Console de siège de véhicule selon l'une des revendications précédentes,
**caractérisée en ce que**
le dispositif de déviation (6) est formé à partir d'au moins trois éléments de déviation (60, 62, 64), de préférence des galets de déviation (61, 63, 65), qui sont agencés en alternance sur deux côtés d'un plan de translation (E) de la deuxième partie de déformation (54) et qui présentent respectivement une partie de déviation (60', 62', 64') qui fait saillie dans le plan de translation (E) ou à travers celui-ci.

6. Console de siège de véhicule selon l'une des revendications précédentes,
**caractérisée en ce que**
les parties de déformation (52, 54) sont constituées d'une matière déformable plastiquement ou en variante d'une matière déformable élastiquement ou présentent celle-ci, de préférence au moins la deuxième partie de déformation (54) étant constituée d'une tôle métallique, ou présentant une telle tôle métallique.

7. Console de siège de véhicule selon la revendication 6,
**caractérisée en ce**
**qu'**au moins la deuxième partie de déformation (54) présente différentes propriétés de déformation sur son étendue longitudinale.

8. Console de siège de véhicule selon l'une des revendications précédentes,
**caractérisée en ce**
**qu'**un dispositif de liaison rigide pouvant être interrompu en cas de collision est prévu, parallèlement à l'élément de limitation de force (50), entre le dispositif de réglage longitudinal (42) et l'élément de guidage associé côté siège ou l'élément de guidage associé côté véhicule (22, 32).

9. Siège de véhicule comprenant une console de siège de véhicule (1) selon l'une des revendications précédentes.

10. Véhicule automobile comprenant au moins un siège de véhicule (2) selon la revendication 9.
